Europäisches Patentamt

European Patent Office

Office européen des brevets

(11) Veröffentlichungsnummer: **0 509 133 A2**

# EUROPÄISCHE PATENTANMELDUNG

(21) Anmeldenummer: **91115043.1**

(22) Anmeldetag: **06.09.91**

(51) Int. Cl.5: **G01L 25/00**

(30) Priorität: **19.04.91 DE 4112839**

(43) Veröffentlichungstag der Anmeldung:
**21.10.92 Patentblatt 92/43**

(84) Benannte Vertragsstaaten:
**AT BE CH DE DK ES FR GB GR IT LI LU NL SE**

(71) Anmelder: **A. M. Erichsen GmbH**
**Simonshöfchen 31**
**W-5600 Wuppertal 11(DE)**

(72) Erfinder: **Havemann, Klaus**
**Sonnenacker 48**
**W-4000 Düsseldorf 31(DE)**

(74) Vertreter: **Peerbooms, Rudolf, Dipl.-Phys.**
**Postfach 200 208 Dickmannstrasse 45c**
**W-5600 Wuppertal 2(DE)**

(54) **Kalibriermaschine für Kraftaufnehmer.**

(57) Eine Kalibriermaschine für Kraftaufnehmer (12) besitzt einen an den jeweiligen Kraftaufnehmer (12) anzuschließenden Lastübertrager (13) für nacheinander ankoppelbare, in einem verketteten Stapel (19) angeordnete Meßgewichte (20) und ist zugleich für eine Vorbelastung unter Überlast ausgelegt. Um den für die Durchführung der Vorbelastung erforderlichen Herstellaufwand zu senken, ist die Kalibriermaschine mit einer von dem Stapel (19) der Meßgewichte (20) getrennten Sonderbelastungseinrichtung (28) zur Durchführung der Vorbelastung versehen. Diese kann aus einem Druckmittelzylinder (30) bestehen, dessen Kolben (31) auf den Lastübertrager (13) wirkt.

Fig.1

Die Erfindung betrifft eine Kalibriermaschine für Kraftaufnehmer, insbesondere Mehrbereichs-Kalibriermaschine, mit einem an den jeweiligen Kraftaufnehmer anzuschließenden Lastübertrager für nacheinander ankoppelbare, in einem verketteten Stapel angeordnete Meßgewichte, wobei die Kalibriermaschine für eine Vorbelastung unter Überlast ausgerüstet ist.

In der Fachwelt werden zwischen Kraftnormal-Meßeinrichtungen, Kraftkontroll-Meßeinrichtungen und Kalibriermaschinen unterschieden, die in Aufbau und Funktion gleichartig sind, sich aber im Grad der Meßgenauigkeit unterscheiden. Vorliegend ist der Ausdruck "Kalibriermaschine" als Sammelbegriff für die drei vorerwähnten Einrichtungen verwendet.

Gattungsgemäße Kalibriermaschinen sind durch die DE 39 09 914 C1 bekannt. Bei einer Kalibrierung werden die Kraftaufnehmer im allgemeinen in Schritten von jeweils 10 % der Aufnehmer-Nennkraft in Aufwärts- und Abwärtsreihen kalibriert, indem entsprechend schwere Meßgewichte nacheinander an den Lastübertrager angekoppelt bzw. von diesem wieder abgekoppelt werden. Darüber hinaus müssen die Kraftaufnehmer vor einer solchen Kalibrierung einer Überlastung ausgesetzt worden sein, z.B. mit 110 % der Nennkraft, vergleiche DIN 51301, Februar 1986, Seite 7. Bei den bekannten Kalibriermaschinen sind zu diesem Zweck je Meßbereich zusätzliche Gewichte angeordnet, die bei Mehrbereichs-Kalibriermaschinen ebenfalls mit der Genauigkeit der übrigen Meßgewichte ausgebildet sein müssen, da sie bei den größeren Meßbereichen mit in der Meß-Belastungskette liegen und ihrerseits damit Kalibriergewichte sind. Zudem müssen bei den bekannten Kalibriermaschinen im allgemeinen auch noch Meßgewichte, die den größeren Meßbereichen zugeordnet sind, unterteilt werden, um die verlangten Kalibrier-Schritte realisieren zu können. Bei den bekannten Kalibriermaschinen ist folglich der für die Durchführung der Vorbelastung erforderliche Herstellaufwand erheblich.

Der Erfindung liegt die Aufgabe zugrunde, den mit der Vorbelastung erforderlichen Herstellaufwand bei gattungsgemäßen Kalibriermaschinen zu senken.

Die Kalibriermaschine nach der Erfindung ist gekennzeichnet durch eine von dem Stapel der Meßgewichte getrennte Sonderbelastungseinrichtung zur Durchführung der Vorbelastung.

Bei der Erfindung ist von der Erkenntnis ausgegangen, daß für eine Vorbelastung bei weitem nicht die Meßgenauigkeit wie für die Kalibrierung verlangt wird. Trennt man zwischen Kalibriereinrichtung und Vorbelastungseinrichtung, kann letztere nach völlig anderen, preiswerteren Konstruktionsmethoden erstellt werden, beispielsweise unter Verwendung handelsüblicher Teile, wodurch eine erhebliche Senkung der Herstellkosten der Gesamt-Kalibriermaschine erreicht wird. Zudem reduziert sich die Anzahl der in der Kalibrierkette angeordneten Meßgewichte, wodurch auch die Bauhöhe des Meßgewichte-Stapels reduziert wird.

In Ausgestaltung der Erfindung kann vorgesehen werden, daß die Sonderbelastungseinrichtung zur alleinigen Aufbringung der Gesamt-Vorbelastungs-Last ausgelegt ist. Bei dieser Ausführungsform wird bei der Vorbelastung nur mit der Sonderbelastungseinrichtung gearbeitet, so daß beispielsweise ganze Serien von Kraftaufnehmern rasch nacheinander einer Vorbelastung unterzogen werden können.

Gemäß einer bevorzugten Ausführungsform der Erfindung ist jedoch vorgesehen, daß die Sonderbelastungseinrichtung nur zur Aufbringung der die Nennkraft übersteigenden Vorlast ausgelegt ist. Bei dieser Ausführungsform kann die Sonderbelastungseinrichtung besonders preiswert und mit geringen baulichen Abmessungen hergestellt werden. Zur Durchführung einer Vorbelastung wird hier der Kraftaufnehmer zunächst mit den seiner Nennkraft entsprechenden Meßgewichten belastet, und zusätzlich wird die die Nennkraft übersteigende Vorlast mittels der Sonderbelastungseinrichtung aufgebracht.

Die Sonderbelastungseinrichtung ist vorteilhafterweise oberhalb des Lastträgers am Maschinengerüst angeordnet. Sie kann aus einem Druckmittelzylinder bestehen, dessen Kolben auf den Lastübertrager wirkt. Alternativ kann die Sonderbelastungseinrichtung auch aus einem oder mehreren verketteten, mittels einer Hub- und Absenkeinrichtung auf dem Lastübertrager absetzbaren Grobgewichten bestehen.

Die Kalibriermaschine nach der Erfindung wird im folgenden anhand zweier in der Zeichnung dargestellter Ausführungsbeispiele näher erläutert. In der Zeichnung zeigen:

Fig. 1 eine Kalibriermaschine in Frontansicht, mit im Vertikalschnitt dargestellten Meßgewichts-Stapeln,

Fig. 2 die Kalibriermaschine, in Fig. 1 von rechts gesehen, und

Fig. 3 ein zweites Ausführungsbeispiel einer Kalibriermaschine nach der Erfindung.

Das Maschinengerüst 29 der Kalibriermaschine besteht im wesentlichen aus vier im Quadrat angeordneten Säulen 1 bis 4, die durch einen oberen, mittleren und unteren Rahmen 5, 6, 7 stabilisiert sind, und aus zwei Kugelumlaufspindeln 8, 9, die jeweils zwischen einem Paar von Säulen 1, 3 und 2, 4 angeordnet sind. Die Spindeln 8, 9 bilden zusammen mit einem regelbaren Elektromotor und einem spielarmen Getriebe eine Hub- und Absenkeinrichtung 10 zum Verfahren einer Traverse 11, die auf den vier Säulen 1 bis 4 geführt ist. Auf der Quertraverse 11 ist ein Druck-Kraftaufnehmer 12 aufgesetzt, auf dem sich ein Lastübertrager 13 abstützt, an den die Meßgewichte der Kalibriermaschine ankoppelbar sind. Der Lastübertrager 13 besteht aus einem rechteckigen, rahmenförmigen Umkehrgehänge 14 und einer Zugstange 15, die über eine Kupplung 16 abhebbar miteinander verbunden sind. Statt eines Druck-Kraftaufnehmers 12 kann die Kalibriermaschine auch zur Kalibrierung eines Zug-Kraftaufnehmers eingesetzt werden, der in diesem Fall zwischen den Einspannlagern 17 an der Unterseite der Traverse 11 und den Lagern 18 an der unteren Rahmenseite des Umkehrgehänges 14 eingehängt wird.

Die Kalibriermaschine ist mit einem ersten Stapel 19 aus neun vollzylindrischen, scheibenförmigen Meßgewichten 20 gleicher Dicke und mit einem zweiten Stapel 21 aus ringförmigen Meßgewichten 22 ausgerüstet. Die beiden Stapel 19, 21 sind konzentrisch angeordnet und der Stapel 19 ist vollständig innerhalb des äußeren Stapels 21 untergebracht. Die Meßgewichte sind innerhalb ihres Stapels als Kette mit jeweils geringem Einzelspiel zwischen zwei Gewichten in üblicher Weise gekoppelt. Das oberste Meßgewicht 23 des äußeren, zweiten Stapels weist eine verhältnismäßig kleine, von der Zugstange 15 durchsetzte Innenbohrung 24 auf, die wesentlich kleiner als die scheibenförmigen Meßgewichte 20 des inneren, ersten Stapels ist. Auf dem oberen Meßgewicht 25 des inneren Stapels ist konzentrisch zur Zugstange 15 ein Auflagering 26 angeordnet. Beim Kalibrieren des Kraftaufnehmers 12 wird die Traverse 11 mittels der Hub- und Absenkeinrichtung 10 aufwärts verfahren, wobei nacheinander zunächst die Meßgewichte 20 des inneren, verketteten Stapels 19 an den Kraftaufnehmer 12 angekoppelt werden, und nach Abheben des unteren Meßgewichtes des inneren Stapels 19 von seiner Basis 27 trifft dann das oberste Meßgewicht 25 bei einem weiteren Hochfahren der Traverse 11 auf das oberste Meßgewicht 23 des äußeren Stapels auf, dessen Meßgewichte dann ebenfalls nacheinander an den Kraftübertrager 13 angekoppelt werden. Da die obersten Meßgewichte 25, 23 der beiden Stapel miteinander verkettet sind, ist somit nur ein Antrieb zum Ankoppeln der Meßgewichte beider Stapel erforderlich.

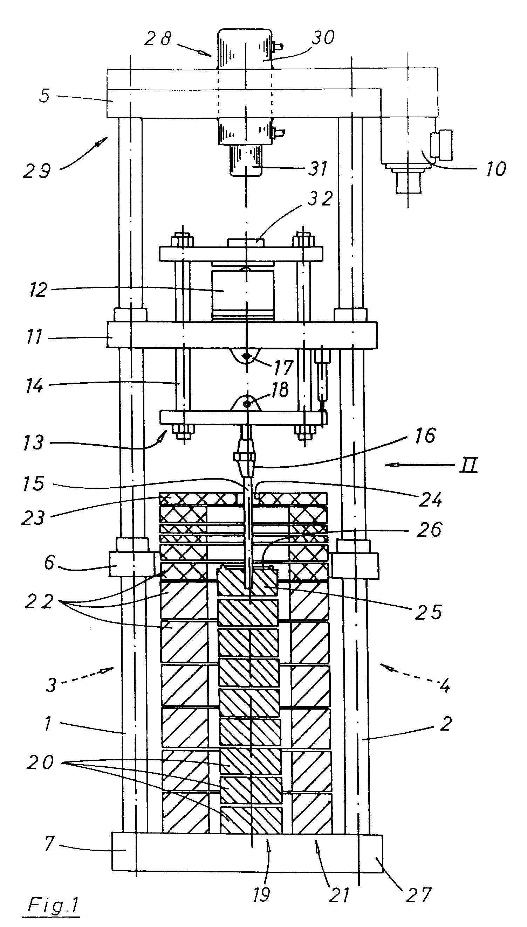

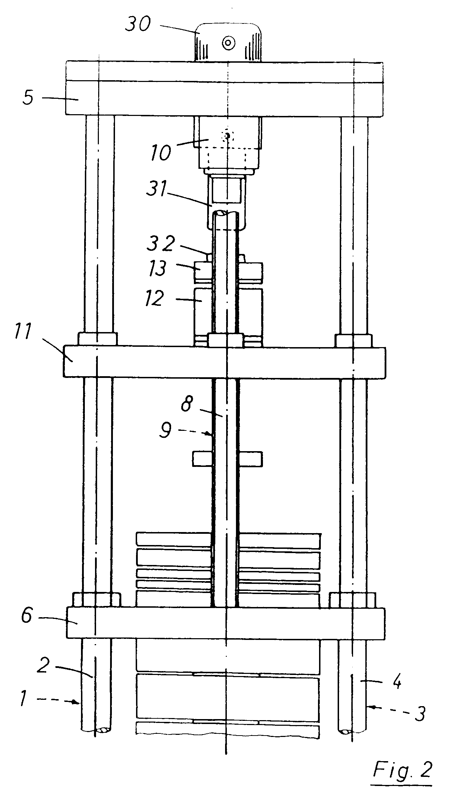

Die Kalibriermaschine ist ferner mit einer von dem Stapel der Meßgewichte 20 getrennten Sonderbelastungseinrichtung 28 versehen, die zur Durchführung einer Vorbelastung der Kraftaufnehmer unter Überlast dient. Die Sonderbelastungseinrichtung 28 ist oberhalb des Lastübertragers 13 am Maschinengrüst 29 angeordnet und besteht beim Ausführungsbeispiel nach den Fig. 1 und 2 aus einem doppelt wirkenden Druckmittelzylinder 30, dessen Kolben 31 auf ein Auflager 32 des Lastübertragers 13 wirkt.

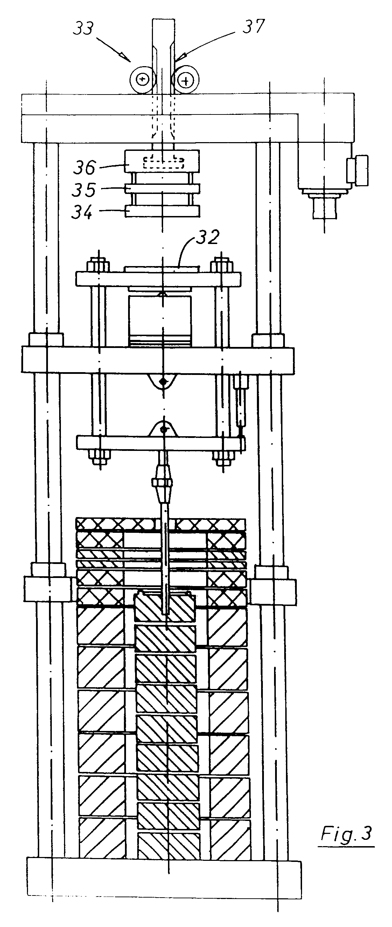

Beim Ausführungsbeispiel nach Fig. 3 besteht die Sonderbelastungseinrichtung 33 aus mehreren verketteten Grobgewichten 34, 35, 36, die mittels einer Hub- und Absenkeinrichtung 37, hier als Zahnstangenantrieb gezeigt, auf den Lastübertrager 13 absetzbar sind.

Beide Ausführungsformen sind für jeweils drei Meßbereiche ausgelegt, wobei für den ersten Meßbereich das Eigengewicht des Kraftübertragers 13 und die neun Meßgewichte 20 des ersten Stapels verwendet werden. Nach Anhängen aller Meßgewichte 20 ist der Kraftaufnehmer 12 mit voller Nennkraft dieses ersten Meßbereiches belastet. Anschließend wird beim Ausführungsbeispiel nach Fig. 1 mittels des Kolbens 31 eine Kraft etwa gleich der Gewichtskraft eines der Meßgewichte von oben her auf den Kraftübertrager 13 zusätzlich aufgebracht, so daß der Kraftaufnehmer zwecks Vorbelastung mit 110 % der Nennkraft belastet ist. Im Falle der Ausführungsform nach Fig. 3 wird in entsprechender Weise durch Absetzen des unteren Grobgewichtes 34, das etwa einem der Meßgewichte 20 entspricht, die Überlast erzeugt.

Bei einer Vorbelastung eines Kraftaufnehmers mit einem größeren Meßbereich werden zusätzlich zu den Meßgewichten 20 noch die oberen, in Kreuzschraffierung gezeigten ringförmigen Meßgewichte 22 benutzt und wird nach Ankoppeln dieser Gewichte die dann erforderliche größere Überlast mittels der Sonderbelastungseinrichtung 28 bzw. 33 ausgeübt. Beim Ausführungsbeispiel nach Fig. 3 werden also beide Grobgewichte 34 und 35 auf den Kraftübertrager 13 aufgesetzt. Die weiteren ringförmigen, schraffiert eingezeichneten Meßgewichte 22 des äußeren Stapels 21 werden entsprechend zur Durchführung einer Kalibrierung in einem noch größeren Meßbereich mit herangezogen, wobei wiederum für die Vorbelastung die Sonderbelastungseinrichtungen 28, bzw. alle drei Grobgewichte 34, 35, 36 beim Ausführungsbeispiel nach Fig. 3, verwendet werden. Die für die eigentliche Kalibrierung erforderlichen Meßgewichte 20 und 22 der Stapel 19 und 21 enthalten somit keine zusätzlichen, speziellen Gewichte zur Aufbringung der die Nennkraft jeweils übersteigenden Vorlast.

Eine andere Arbeitsweise ergibt sich bei der Vorbelastung, wenn die Sonderbelastungseinrichtungen 28 bzw. 33 derart ausgelegt sind, daß sie bereits allein die Gesamt-Vorlast aufbringen können. In einem solchen Fall kann die Vorbelastung lediglich unter Einsatz der Sonderbelastungseinrichtungen durchgeführt werden, während die Meßgewichte abgekoppelt bleiben.

Bezugszeichenliste

1    Säule

| 2 | Säule |
| 3 | Säule |
| 4 | Säule |
| 5 | Rahmen |
| 6 | Rahmen |
| 7 | Rahmen |
| 8 | Kugelumlaufspindel |
| 9 | Kugelumlaufspindel |
| 10 | Hub- und Absenkeinrichtung |
| 11 | Traverse |
| 12 | Kraftaufnehmer |
| 13 | Lastübertrager |
| 14 | Umkehrgehänge |
| 15 | Zugstange |
| 16 | Kupplung |
| 17 | Einspannlager |
| 18 | Lager |
| 19 | Stapel |
| 20 | scheibenförmige Meßgewichte |
| 21 | Stapel |
| 22 | ringförmige Meßgewichte |
| 23 | oberstes Meßgewicht von 22 |
| 24 | Innenbohrung |
| 25 | oberstes Meßgewicht von 20 |
| 26 | Auflagering |
| 27 | Basis |
| 28 | Sonderbelastungseinrichtung |
| 29 | Maschinengerüst |
| 30 | Druckmittelzylinder |
| 31 | Kolben |
| 32 | Auflager |
| 33 | Sonderbelastungseinrichtung |
| 34 | Grobgewicht |
| 35 | Grobgewicht |
| 36 | Grobgewicht |
| 37 | Hub- und Absenkeinrichtung |

**Patentansprüche**

1. Kalibriermaschine für Kraftaufnehmer (12), insbesondere Mehrbereichs-Kalibriermaschine für Kraftaufnehmer, mit einem an den jeweiligen Kraftaufnehmer anzuschließenden Lastübertrager (13) für nacheinander ankoppelbare, in einem verketteten Stapel (19, 21) angeordnete Meßgewichte (20, 22) wobei die Kalibriermaschine für eine Vorbelastung unter Überlast ausgerüstet ist, gekennzeichnet durch eine von dem Stapel (19) der Meßgewichte (20) getrennte Sonderbelastungseinrichtung (28, 33) zur Durchführung der Vorbelastung.

2. Kalibriermaschine nach Anspruch 1, dadurch gekennzeichnet, daß die Sonderbelastungseinrichtung (28, 33) zur alleinigen Aufbringung der Gesamt-Vorlast ausgelegt ist.

3. Kalibriermaschine nach Anspruch 1, dadurch gekennzeichnet, daß die Sonderbelastungseinrichtung (28, 33) zur Aufbringung der die Nennkraft übersteigenden Vorlast ausgelegt ist.

4. Kalibriermaschine nach den Ansprüchen 2 oder 3, dadurch gekennzeichnet, daß die Sonderbelastungseinrichtung (28, 33) oberhalb des Lastübertragers (13) am Maschinengrüst (29) angeordnet ist.

5. Kalibriermaschine nach Anspruch 4, dadurch gekennzeichnet, daß die Sonderbelastungseinrichtung (28) aus einem Druckmittelzylinder (30) besteht, dessen Kolben (31) auf den Lastübertrager (13) wirkt.

6. Kalibriermaschine nach Anspruch 4, dadurch gekennzeichnet, daß die Sonderbelastungseinrichtung (33) aus einem oder mehreren verketteten, mittels einer Hub- und Absenkeinrichtung (37) auf dem Lastübertrager (13) absetzbaren Grobgewicht bzw. Grobgewichten (34, 35, 36) besteht.

Fig.1

Fig. 2

*Fig.3*